# EUROPÄISCHE PATENTSCHRIFT

(11) **EP 0 857 185 B1**
(45) Veröffentlichungstag und Bekanntmachung des Hinweises auf die Patenterteilung: **21.04.2004**
(21) Anmeldenummer: 97927038.6
(22) Anmeldetag: 26.05.1997
(51) Int. Cl.: C08J 5/18, B32B 25/08, C08L 53/02

(54) **TRANSPARENTE, NICHT-BLOCKENDE FOLIE**
TRANSPARENT ANTIBLOCKING FILM
FILM TRANSPARENT ANTI-ADHERENT

(30) Priorität: 30.05.1996 DE 19621688
(43) Veröffentlichungstag der Anmeldung: 12.08.1998
(73) Patentinhaber: BASF AKTIENGESELLSCHAFT, 67056 Ludwigshafen (DE)
(72) Erfinder: NIESSNER, Norbert, D-67159 Friedelsheim (DE); KNOLL, Konrad, D-67069 Ludwigshafen (DE)
(86) Internationale Anmeldenummer: PCT/EP1997/002682
(87) Internationale Veröffentlichungsnummer: WO 1997/046608

(56) Entgegenhaltungen:
- EP-A- 0 511 127
- DE-A- 4 420 952
- DE-A- 19 503 326
- DATABASE WPI Section Ch, Week 7721 Derwent Publications Ltd., London, GB; Class A12, AN 77-37302Y XP002043862 & JP 52 047 849 A (ELECTRO CHEM IND KK) , 16.April 1977
- DATABASE WPI Section Ch, Week 7443 Derwent Publications Ltd., London, GB; Class A12, AN 74-74873V XP002043863 & JP 49 020 254 A (DENKI KAGAKU KOGYO KK) , 22.Februar 1974
- DATABASE WPI Section Ch, Week 9324 Derwent Publications Ltd., London, GB; Class A12, AN 93-191645 XP002043864 & JP 05 117 492 A (KAO CORP) , 14.Mai 1993

## Beschreibung

Transparente, selbsthaftende, gasdurchlässige Dehnfolien (sog. "Cling"folien) sind bekannt. Sie werden im Bereich der Lebensmittelverpackung eingesetzt und sind z.B. in JA-A-76 55 352 und JA-A-74 20 254 beschrieben. Die handelsüblichen Folien bestehen in der Regel aus PVC, was die Beseitigung gebrauchter Folien erschwert.

FR-A-2 686 887 und FR-A-2 691 436 beschreiben die Herstellung von Dehnfolien aus einer Mischung von Styrol-Butadien-Styrol-Block-Copolymeren und einem Styrol-Butadien-Kautschuk als Weichphase, der noch Polyisobutylen enthalten kann. Diese Folien haben gute Rückstelleigenschaften nach Dehnung ("Memory-Effekt") und können selbsthaftend hergestellt werden. Sie sind aber andererseits aufgrund des hohen Anteils an Butadien (die gesamte Weichphase besteht aus reinen Polybutadien) zu wenig wärmestabil. Polybutadien ist außerdem leicht vernetzbar: Während eine geringe Vernetzung für die Erzielung des kautschukelastischen Verhaltens der Weichphase notwendig ist, wirken sich die bei zu weitgehender Vernetzung gebildeten Gel-Anteile in der Praxis als sog. Stippen aus. Die Herstellung einer einwandfreien Folie mit dem richtigen Vernetzungsgrad ist daher schwierig.

Wegen dieser Nachteile werden daher zunehmend Folien aus Ethylencopolymeren (meistens mit bis zu etwa 25 % Hexen-1 oder Octen-1 als Comonomeren) als Verpackungsfolien empfohlen. Einige Handelsprodukte dieser Art sind hervorragend thermostabil und daher gut verarbeitbar.

Aufgrund der molekularen Struktur fehlen in dieser Polymerklasse jedoch weitgehend die für die Styrol-Butadien-Styrol-Polymere typischen Vernetzungsstellen, die das thermoplastisch-kautschukartige Verhalten dieser Polymeren, d.h. einen Rückstelleffekt ("Memory-Effekt") nach Dehnbeanspruchung ermöglichen.

Es bestand also die Aufgabe, ein für den Lebensmittelbereich geeignetes Polymermaterial zu finden, das sich zur Herstellung von transparenten, für Gase durchlässigen Dünnfolien eignet, gute Selbsthaftung-("Cling"-)eigenschaften mit hoher optischer Qualität (d.h. mit niedrigem Stippenanteil) und zugleich einem sehr guten Memory-Effekt verbinden. Eine weitere Aufgabe bestand darin, die bei den bekannten Verpackungsfolien häufige Trübung durch Kondenswassertropfen bei der Lagerung von Lebensmitteln zu vermeiden, die vermutlich durch deren unpolare Oberfläche immer dann auftritt, wenn sich die Bedingungen beim Abpacken und Lagern deutlich unterscheiden, insbesondere wenn bei Temperaturen über der späteren Lagertemperatur abgepackt wird.

Schließlich ist noch ein weiteres Problem der bekannten Folien die starke Schrumpfneigung, insbesondere quer zur Extrusionsrichtung ("Querschrumpf"); sie muß klein gehalten werden, um die geforderten Toleranzen bei manuellen oder automatischen Abpackmaschinen einzuhalten.

Die Erfindung stellt eine Folie bereit, welche zu einer nur geringen Trübung durch Kondenswasserbildung führt und welche nach der Herstellung bei üblicher Lagerung innerhalb von drei Monaten einen Querschrumpf von weniger als 3 % aufweist. Erfindungsgemäß hergestellte Folien weisen die übrigen vorstehend als wünschenswert herausgestellten Eigenschaften in hohem Maße auf und können nach der Verwendung ohne Probleme entsorgt werden, da sie praktisch vollständig zu Kohlendioxid und Wasser verbrannt werden können.

Erfindungsgegenstand ist eine transparente Polymermischung in Rollenform, insbesondere für den Lebensmittelverpackungsbereich, aus, bezogen auf die Gewichtssumme aus P1 bis P5,
- P1:: 15 bis 99,6 Gew. % eines kautschukelastischen Blockcopolymerisats P1 aus mindestens einem einpolymerisierte Einheiten eines vinylaromatischen Monomeren aufweisenden, eine Hartphase bildenden Block S und mindestens einem sowohl einpolymerisierte Einheiten eines vinylaromatischen Monomeren (S) wie eines Diens (B) aufweisenden elastomeren, eine Weichphase bildenden Block B/S, wobei S für den vinylaromatischen Block und B/S für die Weichphase, also den statistisch aus Dien- und vinylaromatischen Einheiten aufgebauten Block steht und wobei die Glastemperatur T_{g} des Blocks S über 25°C und die des Blocks B/S unter 25°C liegt und das Phasenvolumen-Verhältnis von Block S zu Block B/S so gewählt ist, daß der Anteil der Hartphase am gesamten Blockcopolymerisat 1 bis 40 Volumen-% und der Gewichtsanteil des Diens weniger als 50 Gew.% beträgt,
- P2:: 15 bis 99,6 % eines thermoplastischen Polymeren P2,
- P3:: 0,1 bis 10 % eines Anti-Fogging-Agens P3,
- P4:: 0,1 bis 5 % eines primären Antioxidans P4,
- P5:: 0,1 bis 5 % eines sekundären Antioxidans P5 und
- P6:: 0,1 bis 50 % weiteren Hilfsstoffen,
die während dreimonatiger Lagerdauer nach der Herstellung quer zur Abzugsrichtung um nicht mehr als 3 % schrumpft.
Weitere, insbesondere bevorzugte Ausgestaltungen der Erfindung ergeben sich aus den beigefügten Patentansprüchen sowie den nachstehenden Erläuterungen.

Man erhält ein erfindungsgemäßes kautschukelastisches Blockcopolymerisat P1 dadurch, daß im Rahmen der vorstehenden Parameter die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens. Weitere und eingehendere Angaben zur Herstellung von kautschukelastischen Blockcopolymerisaten, die aus einen statistischen Copolymerisat eines Vinylaromaten mit einem Dien bestehen oder dieses enthalten, sind in der DE-A-44 20 952 enthalten.

Ein erfindungsgemäßes Blockcopolymerisat kann z.B. durch eine der allgemeinen Formeln 1 bis 12 dargestellt werden:

(1) S-B/S-S;

(2) (S-B/S)ₙ;

(3) (S-B/S)ₙ-S;

(4) B/S-(S-B/S)ₙ;

(5) X-[(S-B/S)ₙ]ₘ₊₁;

(6) X-[(B/S-S)ₙ]ₘ₊₁;

(7) X-[(S-B/S)ₙ-S]ₘ₊₁;

(8) X-[(B/S-S)ₙ-B/S]ₘ₊₁;

(9) Y-[(S-B/S)ₙ]ₘ₊1;

(10) Y-[(B/S-S)ₙ]ₘ₊₁;

(11) Y-[(S-B/S)ₙ-S]ₘ₊₁;

(12) Y-[(B/S-S)ₙ-B/S]ₘ₊₁;

wobei S für den vinylaromatischen Block und B/S für die Weichphase, also den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten.

Der Mischungspartner (Komponente P2) des erfindungsgemäßen kautschukelastischen Blockcopolymerisats P1 ist z.B. ein teilkristallines Polymerisat, vorzugsweise ausgewählt aus teilkristallinen Polyamiden, teilaromatischen Copolyamiden, Polyolefinen, Ionomeren, Polyestern, Polyetherketonen, Polyoxyalkylenen und Polyarylensulfiden.

### Polyamide

Teilkristalline, bevorzugt lineare Polyamide wie Polyamid-6; Polyamid-6,6; Polyamid-4,6; Polyamid-6,12 und teilkristalline Copolyamide auf Basis dieser Komponenten sind geeignet. Weiter können teilkristalline Polyamide eingesetzt werden, deren Säurekomponente ganz oder teilweise aus Adipinsäure und/oder Terephthalsäure und/oder Isophthalsäure und/oder Korksäure und/oder Sebacinsäure und/oder Acelainsäure und/oder Dodecandicarbonsäure und/oder einer Cyclohexandicarbonsäure besteht, und deren Diaminkomponente ganz oder teilweise insbesondere aus m und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen im Prinzip bekannt sind (vgl. Encyclopedia of Polymers, Vol. 11, S. 315 ff.).

Die Molekulargewichte Mₙ (Zahlenmittel) der als Komponente P2 geeigneten Polyamide liegen bevorzugt im Bereich zwischen 5,000 und 100,000, besonders bevorzugt zwischen 10,000 und 80,000.

Geeignet sind teilkristalline lineare Polyamide z.B. mit einer relativen Viskosität von 2,2 bis 4,5 (gemessen in 96 gew.-%iger Schwefelsäure bei einer Konzentration von 1 g/100 ml bei 23°C). Bevorzugt sind Polyamide, die sich ganz oder teilweise von Lactamen mit 7 bis 13 Ringgliedern ableiten, wie Polycaprolactam, Polycapryllactam oder Polylaurinlactam.

Geeignet sind ferner Polyamide, die durch Umsetzung von Dicarbonsäuren mit einem oder mehreren Diaminen erhalten werden. Geeignete Dicarbonsäuren sind beispielsweise Alkandicarbonsäuren mit 6 bis 12, insbesondere 6 bis 10 Kohlenstoffatomen, insbesondere Adipinsäure. Geeignete Diamine sind beispielsweise Alkan- oder Cycloalkandiamine mit 4 bis 12, insbesondere 4 bis 8 Kohlenstoffatomen; Hexamethylendiamin, m-Xylylendiamin, Bis(4-aminophenyl)methan, Bis(4-aminocyclohexyl)methan oder Bis(4-aminophenyl)propan-2,2 oder deren Mischungen sind besonders geeignete Partner zur Herstellung solcher Polyamide. Es kann vorteilhaft sein, die genannten Polyamide für sich herzustellen und deren Mischungen zu verwenden.

Besondere technische Bedeutung haben Polyamid-6 (Polycaprolactam), Polyamid-6,6 (Polyhexamethylenadipinamid) und Polyamide, die zu mindestens 80 Gew.-% aus wiederkehrenden Einheiten der Formel -[-NH-(CH₂)₄-NH-CO-(CH₂)₄-CO-]- aufgebaut sind. Die zuletzt genannten Polyamide sind durch Kondensation von 1,4-Diaminobutan mit Adipinsäure erhältlich. Geeignete Herstellungsverfahren für Polyamide sind z.B. in EP-A-38 094, EP-A-38 582 und EP-A-39 524 beschrieben.

Ebenfalls geeignet sind Polyamide mit geringem Anteil, vorzugsweise bis etwa 10 Gew.-%, an anderen einkondensierbaren Bestandteilen, insbesondere anderen Amidbildnern wie beispielsweise alpha, ω-Aminosäuren oder N-Carbonsäure-anhydriden (Leuchs-anhydriden) von Aminosäuren.

Nach einer bevorzugten Ausgestaltung der Erfindung enthalten die erfindungsgemäßen Formmassen als Komponente P2 ein teilaromatisches Copolyamid mit dem nachstehend beschriebenen Aufbau.

Bevorzugte teilaromatische Copolyamide P2 enthalten als Komponente b₁: 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der Gesamtmenge an eingesetzten aromatischen Dicarbonsäuren kann durch Isophthalsäure oder andere aromatische Dicarbonsäuren ersetzt werden, vorzugsweise solche, in denen die Carboxylgruppen in para-Stellung stehen.

Neben den Einheiten, die sich von Terephthalsäure und Hexamethylendiamin ableiten, enthalten die teilaromatischen Copolyamide Einheiten, die sich von ε-Caprolactam ableiten (b₂) und/oder Einheiten, die sich von Adipinsäure und Hexamethylendiamin (b₃) ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall beträgt der Anteil an Einheiten, die frei von aromatischen Gruppen sind, bevorzugt mindestens 10 Gew.-%, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Der Schmelzpunkt besonders geeigneter teilaromatischer Copolyamide liegt z.B. im Bereich von 260 bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ε-Caprolactam weisen bei einem Gehalt von etwa 70 Gew.-% an Einheiten, die sich von Terephthalsäure und Hexamethylendiamin ableiten, einen Schmelzpunkt im Bereich von 300°C und eine Glasübergangstemperatur von mehr als 110°C auf.

Binäre Copolyamide auf der Basis von Terephthalsäure, Adipinsäure und Hexamethylendiamin erreichen bereits bei einem Gehalt von etwa 55 Gew.-% Einheiten aus Terephthalsäure und Hexamethylendiamin einen Schmelzpunkt von 300°C und mehr, wobei die Glasübergangstemperatur nicht ganz so hoch liegt wie bei binären Copolyamiden, die ε-Caprolactam anstelle von Adipinsäure bzw. Adipinsäure/Hexamethylendiamin enthalten.

Geeignete teilaromatische Copolyamide können nach den in den EP-A-129 195 und EP-A-129 196 beschriebenen Verfahren hergestellt werden.

Erfindungsgemäß können als Komponente P2 ferner amorphe Polyamide verwendet werden. Basierend auf den bereits genannten Monomeren werden noch zusätzliche, häufig mit einer oder mehreren, die Kristallisation behindernden Seitengruppen versehene Monomere einkondensiert. Als Resultat erhält man ein in der Regel transparentes Polyamid.

### Polyolefine

Beispiele für Polymerisate, die sich als Komponente P2 der erfindungsgemäßen Formmassen eignen, sind weiterhin teilkristalline Polyolefine, vorzugsweise Homo- und Copolymerisate von Olefinen wie Ethylen; Propylen; Buten-1; Penten-1; Hexen-1; Hepten-1; 3-Methylbuten-1; 4-Methylbuten-1; 4-Methylpenten-1 und Octen-1. Geeignete Polyolefine sind demnach z.B. Polyethylen; Polypropylen; Polybuten-1 oder Poly-4-methylpenten-1. Allgemein unterscheidet man bei Polyethylen (PE): High-Density-PE (HDPE), Low-Density-PE (LDPE) und Linear-Low-Density-PE (LLDPE).

Bevorzugt als Komponente P2 geeignete Polyolefine sind Polyethylen, Polypropylen und Poly-4-methylpenten-1, besonders bevorzugt Polyethylen und Polypropylen. Die Polyolefine können neben den Olefinen auch noch untergeordnete Mengen anderer Monomerer enthalten. Besonders geeignet sind z.B. Ethylen/Octen-Copolymere oder Ethylen/Hexen-Copolymere mit einem hohen Anteil von Octen oder Hexen (z.B. die Handelsprodukte Affinity® oder Engage® der DOW Chemical Co.)

### Ionomere

Bei einer anderen Ausführungsform der Erfindung handelt es sich bei der Komponente P2 um Ionomere. Dies sind im allgemeinen Polyolefine, wie sie vorstehend beschrieben wurden, insbesondere Polyethylen, die Monomere mit Carboxylgruppen einpolymerisiert enthalten, z.B. Acrylsäure, Methacrylsäure und ggf. weitere copolymerisierbare Monomere. Die Säuregruppen werden im allgemeinen mit Hilfe von Metallionen wie beispielsweise Na-, Ca-, Mg- und Al-Ionen in ionische, evt. ionisch vernetzte Polyolefine umgewandelt, die sich jedoch noch thermoplastisch verarbeiten lassen (vgl. z.B.US-PSen 3,264,272; 3,404,134; 3,355,319; 4,321,337). Es ist jedoch nicht unbedingt erforderlich, die Säuregruppen enthaltenden Polyolefine mittels Metallionen umzuwandeln. Auch freie Säuregruppen enthaltende Polyolefine, die dann im allgemeinen einen kautschukartigen Charakter besitzen und teilweise noch weitere copolymerisierbare Monomere enthalten, z.B. (Meth)acrylate, sind als erfindungsgemäße Komponente P2 geeignet.

### Polyester

Daneben können als Komponente P2 auch Polyester, vorzugsweise aromatisch-aliphatische Polyester eingesetzt werden. Beispiele sind Polyalkylenterephthalate, z.B. auf Basis von Ethylenglykol, Propandiol-1,3, Butandiol-1,4, Hexandiol-1,6 und 1,4-Bis-hydroxymethylcyclohexan, sowie Polyalkylennaphthalate wie Polyethylen- oder Polybutylennaphthalat. Vorzugsweise werden Polyethylenterephthalat, Polybutylenterephthalat und Copolymere aus Cyclohexan-1,4-dimethanol, Ethylenglykol und Terephthalsäure eingesetzt. Insbesondere wird Polybutylenterephthalat verwendet. Das Molekulargewicht (Gewichtsmittel, M_{w}) geeigneter Polyalkylenterephthalate liegt im allgemeinen zwischen 10,000 und 500,000, bevorzugt zwischen 10,000 und 80,000. Die Herstellung, z.B. durch Umesterung ist z.B. in den US-PSen 2,647,885; 2,643,989; 2,534,028 beschrieben.

### Polyetherketone

Als Komponente P2 können weiterhin aromatische Polyetherketone eingesetzt werden, wie sie z.B. beschrieben sind in der GB-PS 1 078 234, der US-PS 4,010,147, der EP-A-135 938 und in der Publikation von C. K. Sham et. al., Polymer 29/6, 1016-1020 (1988). Diese Polyetherketone können erhalten werden, indem man Bisphenole mit Bis(halogenaryl)ketonen in polaren aprotischen Lösungsmitteln in Gegenwart von Alkalicarbonaten, z.B. Lithiumcarbonat, umsetzt. Ein typisches derartiges Umsetzungsprodukt ist z.B. das aus Hydrochinon und 4,4'-Difluorbenzophenon gebildete Produkt.

### Polyoxyalkylene

Weiter können als Komponente P2 der erfindungsgemäßen Formmassen Polyoxymethylene eingesetzt werden, d.h. Polyoxyalkylene, die mindestens 50 mol-% wiederkehrende Einheiten -CH₂O- in der Polymerhauptkette aufweisen. Die Herstellung dieser Verbindungen ist allgemein bekannt: Die Homopolymeren werden im allgemeinen durch Polymerisation von Formaldehyd oder Trioxan in Gegenwart von geeigneten Katalysatoren hergestellt. Bevorzugt werden Oxymethylencopolymere, die neben den wiederkehrenden Einheiten -CH₂O- noch bis zu 50, vorzugsweise 0,1 bis 20 und insbesondere 0,3 bis 10 mol-% an wiederkehrenden Einheiten der Struktur (I)

-O-C(R¹,R²)-C(R³,R⁴)-(R⁵)ₙ- (I)

enthalten, wobei R¹ bis R⁴ unabhängig voneinander ein Wasserstoffatom oder C₁-C₄-Alkyl und R⁵: -CH₂-, -CH₂O-, eine durch C₁-C₄-Alkyl oder C₁-C₄-Haloalkyl substituierte Methylengruppe oder Oxymethylengruppe darstellen und n den Wert 0 oder einen ganzzahligen Wert im Bereich von 1-3 annehmen kann.

Als modifizierende Bausteine für die vorstehend erläuterten Polyoxyalkylene sind beispielsweise cyclische Ether geeignet wie Ethylenoxid, 1,2-Propylenoxid, 1,2-Butylenoxid, 1,3-Butylenoxid, 1,3-Dioxan, 1,3-Dioxolan und 1,3-Dioxepan sowie lineare Oligo- oder Polyformale wie Polydioxolan oder Polydioxepan.

Als Komponente P2 geeignet sind auch Oxymethylenterpolymerisate, die beispielsweise durch Umsetzung von Trioxan, einem der vorstehend beschriebenen cyclischen Ether und einem dritten Monomeren, vorzugsweise einem Diepoxid der Formel (II)

Glycidyl-CH₂-Z-CH₂-Glycidyl (II)

hergestellt werden, wobei Z eine Einfachbindung oder einen der zweiwertigen Reste -O-, -C₁-C₈-Alkylen- oder -C₃-C₈-Cycloalkylenbedeutet.

Bevorzugte Monomere dieser Art sind Ethylendiglycid, Diglycidether und Diglycidylformal, Dioxan oder Trioxan im Molverhältnis 2:1 sowie Diether aus 2 Mol eines Glycidylrestes und 1 Mol eines aliphatischen Diols mit 2-8 C-Atomen wie beispielsweise die Diglycidether von Ethylenglykol, 1,2-Propandiol, 1,4-Butandiol, Cyclobutan-1,3-diol und Cyclohexan-1,4-diol.

Bevorzugte Oxymethylencopolymeren haben einen Schmelzpunkt von mindestens 150°C und ein Molekulargewicht (Gewichtsmittel M_{w}) im Bereich von 5,000 bis 150,000, vorzugsweise von 7,000 bis 100,000. Endgruppenstabilisierte Oxymethylenpolymerisate, die an den Kettenenden C-C-Bindungen aufweisen, werden besonders bevorzugt.

### Polyarylensulfide

Als Komponente P2 sind weiter geeignet die Polyarylensulfide, insbesondere das Polyphenylensulfid. Dessen Herstellung ist beispielsweise beschrieben in US-PS 3,354,129, 3,786,035 und EP-A-171 021.

### Polyurethane

Als Komponente P2 der erfindungsgemäßen thermoplastischen Formmassen werden auch thermoplastische Polyurethane verwendet. Thermoplastische Polyurethane und Verfahren zu ihrer Herstellung sind bekannt und beispielsweise in der DE-A-36 28 562 beschrieben.

Geeignete thermoplastische Polyurethane können hergestellt werden z.B. durch Umsetzung von organischen, vorzugsweise aromatischen Diisocyanaten, Polyhydroxylverbindungen mit einem gewichtsgemittelten Molekulargewicht (M_{w}) von 500 bis 8,000 und Kettenverlängerungsmitteln mit einem M_{w} von 60 bis 400.

Als organische Diisocyanate kommen beispielsweise aliphatische, cycloaliphatische und vorzugsweise aromatische Diisocyanate in Betracht. Im einzelnen seien genannt: Aliphatische Diisocyanate, wie Hexamethylendiisocyanat, cycloaliphatische Diisocyanate, wie Isophorondiisocyanat; 1,4-Cyclohexandiisocyanat; 1-Methyl-2,4-cyclohexandiisocyanat und 2,6-Cyclohexandiisocyanat sowie die entsprechenden Isomerengemische; 4,4'-; 2,4'- und 2,2'-Dicyclohexylmethandiisocyanat sowie die entsprechenden Isomerengemische und vorzugsweise aromatische Diisocyanate, wie 2,4-Toluylendiisocyanat, Gemische aus 2,4- und 2,6-Toluylendiisocyanat; 4,4'-; 2,4'- und 2,2'-Diphenylmethan-diisocyanat; Gemische aus 2,4'- und 4,4'-Diphenylmethan-diisocyanat; urethanmodifizierte, flüssige 4,4'- und/oder 2,4'-Diphenylmethandiisocyanate; 4,4'-Diisocyanatodiphenylethan-1,2 und 1,5-Naphthylendiisocyanat. Vorzugsweise verwendet werden Hexamethylendiisocyanat, Isophorondiisocyanat; 1,5-Naphthylendiisocyanat, sowie Diphenylmethandiisocyanat-Isomerengemische mit einem Gehalt von mindestens 96 Gew.-% an 4,4'-Diphenylmethandiisocyanat.

Als höhermolekulare Polyhydroxylverbindungen mit Molekulargewichten von 500 bis 8,000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den oben genannten Molekulargewichten. Die Polyhydroxylverbindungen müssen zumindest überwiegend linear, d. h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül umsetzt, das zwei aktive Wasserstoffatome gebunden enthält. Als Alkylenoxide seien z.B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole wie N-Alkyl-Diethanolamine (beispielsweise N-Methyldiethanolamin) und Diole, wie Ethylenglykol, 1,3-Propylenglykol, Butandiol-1,4 und Hexandiol-1,6. Es können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylenglykole.

Solche Polyetherole können erhalten werden, indem man z.B. an ein Startermolekül zunächst Propylenoxid-1,2 und daran anschließend Ethylenoxid polymerisiert oder zunächst das gesamte Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid und dann den Rest des Ethylenoxids an das Startermolekül anpolymerisiert.

Die für die Erfindung wichtigsten linearen Polyetherole besitzen ein Molekulargewicht M_{w} von 500 bis 8,000, vorzugsweise 600 bis 6,000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol; Diethylenglykol; Butandiol-1,4; Pentandiol-1,5; Hexandiol-1,6; Decandiol-1,10; 2,2-Dimethylpropandiol-1,3; Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Dialkylenglykolpolyadipate mit 2 bis 6 Kohlenstoffatomen im Alkylenrest, wie z.B. Ethandiolpolyadipat; 1,4-Butandiolpoly-adipat; Ethandiol-butandiol-1,4-polyadipat; 1,6-Hexandiol-neopentylglykolpolyadipat; Polycaprolacton und insbesondere 1,6-Hexandiol-1,9-butandiolpolyadipat.

Geeignete Polyesterole besitzen z.B. ein Molekulargewicht M_{w} von 500 bis 6,000, vorzugsweise von 800 bis 3,500.

Als Kettenverlängerungsmittel mit einem Molekulargewicht M_{w} von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 C-Atomen, wie z.B. Terephthalsäure-bis-ethylenglykol oder -bis-butandiol-1,4; Hydroxyalkylenether des Hydrochinons, wie z.B. 1,4-Di(β-hydroxyethyl)hydrochinon; (cyclo)aliphatische Diamine, wie z.B. 4,4'-Diaminodicyclohexylmethan; 3,3'-Dimethyl-4,4'-diaminodicyclohexylmethan; Isophorondiamin; Ethylendiamin; 1,2-; 1,3-Propylendiamin; N-Methylpropylendiamin-1,3; N,N'-Dimethylethylendiamin und aromatische Diamine, wie z.B. 2,4- und 2,6-Toluylendiamin; 3,5-Diethyl-2,4- und -2,6-Toluylendiamin und primäre ortho-di-, tri- und/oder tetra-alkylsubstituierte 4,4'-Diaminodiphenylmethane.

Zur Einstellung von Härte und Schmelzpunkt der thermoplastischen Polyurethane können die Polyhydroxyl-(Diol-)Verbindungen und Kettenverlängerungsmittel hinsichtlich ihres molaren Verhältnissen relativ weit variiert werden. Bewährt hat sich ein molares Verhältnisse von Polyhydroxylverbindung zu Kettenverlängerungsmittel von 1:1 bis 1:12, insbesondere von 1:1,8 bis 1:6,4, wobei die Härte und der Schmelzpunkt der thermoplastischen Polyurethane mit zunehmendem Gehalt an Polyhydroxylverbindung ansteigt.

Zur Herstellung der thermoplastischen Polyurethane werden die Aufbaukomponenten in einer solchen Menge umgesetzt, daß das Äquivalenzverhältnis von NCO-Gruppen der Diisocyanate zur Summe der Hydroxylgruppen oder Hydroxyl- und Aminogruppen der.Polyhydroxylverbindungen und Kettenverlängerungsmittel 1:0,85 bis 1:1,20, vorzugsweise 1:0,95 bis 1:1,05 und insbesondere 1:0,98 bis 1:1,02 beträgt.

Geeignete Katalysatoren, welche insbesondere die Reaktion zwischen den NCO-Gruppen der Diisocyanate und den Hydroxylgruppen der Polyhydroxylverbindungen und Kettenverlängerungsmittel beschleunigen, sind die bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan (DABCO) und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung eingesetzt.

### Sonstige Thermoplaste

Weiterhin als Komponente P2 geeignet sind selbstverstärkende kristalline Polyarylate (LCP's = liquid crystalline polymers), lineare Polyimide, Polybenzimidazole, Polyhydantoine, Polypyrrole, Polyphosphazene, Silicone sowie zB. nichtkristalline Polymerisate auf Acrylester- oder Styrolbasis

Als Komponente P2 der erfindungsgemäßen Mischung können mit besonderem Vorteil auch nicht-kristalline Copolymerisate wie Methacrylat-Acrylat-Styrol-Polymerisate, Acrylnitril-Butadien-Styrol-Polymerisate (ABS), Acrylnitril-Styrol-Acrylester-Polymerisate (ASA), Methacrylat-Butadien-Styrol-Polymerisate (MBS), schlagfestes Polystyrol (HIPS), aber auch Homopolymerisate wie Polystyrol, polymethylmethacrylat (PMMA), Polyacrylnitril, Polymethacrylimid verwendet werden. Solche Polymerisate bestehen z.B. im Falle von ABS, ASA, MBS, aber auch im Falle von schlagfestem Polystyrol aus zwei Phasen, einer kontinuierlichen (oft als Hartphase oder Matrix bezeichnet) und einer dispersen (meistens als Kautschuk- oder Weichphase bezeichnet). Bei den einphasigen Polymeren fehlt in der Regel die disperse weiche Kautschukphase. Erfindungsgemäße Komponenten P2 sind somit einphasige Polymere, bestehend nur aus Hartphase (wie z.B. Polystyrol oder PMMA), zweiphasige Polymere (z.B. ABS, ASA, MBS, schlagfestes Polystyrol), aber auch nur die Weichphasen (z.B. der in ABS, ASA, MBS, schlagfestem Polystyrol enthaltene Kautschuk) in ungepfropfter, gepfropfter, reiner oder angereicherter Form.

Erfindungsgemäße schlagfeste Polystyrole und Standard-Polystyrole, deren Herstellung, Struktur und Eigenschaften sind in der Übersichtsliteratur (A.Echte, F.Haaf, J.Hambrecht in: Angew. Chem. (Int.Ed.Engl.) 20, 344-361, (1981); sowie Kunststoffhandbuch, Band Polystyrol, Carl Hanser Verlag (1968) eingehend beschrieben. Darüber hinaus können die verwendeten schlagzähen Polystyrole gegenüber üblichem schlagzähem Polystyrol strukturell verändert sein z.B. durch die Verwendung spezieller Polybutadienkautschuke. Solche speziellen Polybutadienkautschuke haben z.B. einen gegenüber herkömmlichen Kautschuken veränderten 1,4-cis- bzw. 1,4-trans-Anteil oder ein anderes Verhältnis von 1,2- und 1,4-Verknüpfungen. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden. Geeignetes Standard-Polystyrol kann sowohl nach dem Verfahren der anionischen wie der üblicheren radikalischen Polymerisation hergestellt werden. Die durch das Polymerisationsverfahren beeinflußbare Uneinheitlichkeit des Polymerisats ist dabei von untergeordneter Bedeutung. Bevorzugt werden Standard-Polystyrol und schlagzähes Polystyrol, deren toluollöslicher Anteil ein mittleres Molekulargewicht M_{w} von 50,000 bis 500,000 g/mol aufweist und die gegebenenfalls noch mit Additiven, wie beispielsweise Mineralöl, Stabilisator, Antistatika, Flammschutzmittel oder Wachsen ausgerüstet sind.

Geeignete Monomere zur Bildung der Hartphase können beispielsweise aus den im folgenden aufgeführten Monomeren ausgewählt sein: Styrol und seine substituierten Derivate, wie z.B. α-Methylstyrol, 4-Methylstyrol, 3,4-Dimethylstyrol, 4-tert.-Butylstyrol, 2- und 4-Divinylbenzol und 4-Methyl-α-methylstyrol. Technisch geeignet wären auch halogenierte Styrole wie α-Chlorstyrol, 4-Chlorstyrol, 2,4-Dichlorstyrol, und 4-Chlor-α-methylstyrol, die jedoch aus praktischen Gründen weniger infrage kommen. Bevorzugt sind Styrol und α-Methylstyrol.

Unter Acryl- und Methacrylverbindungen sind Monomere zu verstehen wie z.B. Acrylnitril, Methacrylnitril, Acryl- und Methacrylsäure, Methylacrylat, Ethylacrylat, n- und Isopropylacrylat, n- und Isobutylacrylat, t-Butylacrylat, 2-Ethylhexylacrylat, Methyl-methacrylat, Ethylmethacrylat; n- und Isopropylmethacrylat, n- und Isobutylmethacrylat, t-Butylmethacrylat, Cyclohexylmethacrylat, Isobornylmethacrylat, Maleinsäureanhydrid und dessen Derivate, wie Maleinsäureester, Maleinsäurediester und Maleinimid, z.B. Alkyl- und Acrylmaleinimide, wie beispielsweise Methyl- oder Phenylmaleinimid, bevorzugt Acrylnitril, Methylmethacrylat, Maleinsäureanhydrid und Phenylmaleinimid.

Beispiele für geeignete Homo- bzw. Copolymerisate sind Polystyrol, Polymethylmethacrylat, Styrol-Acrylnitril-Copolymere, α-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Methylmethacrylat-Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-t-Butylmethacrylat-Copolymere, Styrol-Acrylnitril-t-Butylmethacrylat-Copolymere.

Als Weichphase können die einschlägig üblichen Kautschuke Verwendung finden. Es können beispielsweise Naturkautschuk, Epichlorhydrin-Kautschuke, Ethylen-Vinylacetat-Kautschuke, Polyethylenchlorsulfonkautschuke, Siliconkautschuke, Polyetherkautschuke, Dienkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke und Fluorkautschuke verwendet werden. Bevorzugt wird Acrylatkautschuk, Ethylen-Propylen-(EP-)-Kautschuk, Ethylen-Propylen-Dien (EPDM-)-Kautschuk, insbesondere Butadien-Isopren-Kautschuk, Dienkautschuk oder Siliconkautschuk eingesetzt.

Bei den Acrylatkautschuken handelt es sich i.a. um Alkylacrylat-Kautschuke aus einem oder mehreren C₄-C₈-Alkylacrylaten, wobei bevorzugt mindestens teilweise Butyl-, Hexyl-, Octyl- oder 2-Ethylhexylacrylat verwendet worden sind. Diese Alkylacrylat-Kautschuke können bis zu 30 Gew.-% harte Polymere bildende Monomere wie Vinylacetat, (Meth)acrylnitril, Styrol, substituiertes Styrol, Methylmethacrylat, Vinylether einpolymerisiert enthalten. Die Acrylatkautschuke enthalten weiterhin bis zu 10 Gew.-%, vorzugsweise 1 bis 5 Gew.-% an vernetzend wirkenden, polyfunktionellen Monomeren (Vernetzungsmonomere). Beispiele hierfür sind Monomere, die zwei oder mehr zur Copolymerisation befähigte Doppelbindungen enthalten.

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol-, Acryl- oder Methacrylverbindungen (z.B. Acrylnitril, Methacrylnitril, Acrylsäure, Methacrylsäure, Acrylsäurebutylester, Acrylsäureethylhexylester und Methylmethacrylat). Besonders bevorzugte Dien-Kautschuke sind handelsübliche Butadien-, Butadien-Styrol-, Butadien-Methylmethacrylat-, Butadien-Acrylsäurebutylester- und Butadien-Acrylnitril-Kautschuke (z.B. Cariflex® (Shell); Finaprene® (Petrofina); Tufprene® (Asahi); Exxellor® (Exxon); Europrene® (Enichem) etc. Die vorstehende Aufzählung und Reihenfolge der genannten Produkte ist willkürlich; die Firmenbezeichnungen sind abgekürzt).

Geeignete Siliconkautschuke können z.B. vernetzte Siliconkautschuke aus Einheiten der allgemeinen Formeln R₂SiO, RSiO_{3/2}, R₃SiO_{1/2} und SiO_{2/4} sein, wobei R einen einwertigen Rest darstellt. Die Menge der einzelnen Siloxaneinheiten sind dabei so bemessen, daß auf 100 Einheiten der Formel R₂SiO bis 10 Mol-Einheiten der Formel RSiO_{3/2}, bis 1,5 Mol-Einheiten R₃SiO_{1/2} und bis 3 Mol-Einheiten SiO_{2/4} vorhanden sind. R kann dabei entweder ein einwertiger gesättigter Kohlenwasserstoffrest mit 1 bis 18 C-Atomen, der Phenylrest oder Alkoxy-Rest oder eine radikalisch leicht angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Phenyl.

Bei der Weichkomponente kann es sich auch um ein mehrstufig aufgebautes Polymerisat handeln (sog. "Kern/Schale-Aufbau", "core/shell morphology"). Beispielsweise kann ein kautschukelastischer Kern (Glastemperatur T_{g} <0°C) von einer "harten" Schale (Glastemperatur T_{g} >0°C) oder umgekehrt umhüllt sein.

### Polycarbonat

Erfindungsgemäße Komponenten P2 sind ferner beispielsweise Polycarbonat oder Mischungen aus Polycarbonat mit mehreren der nachstehend beschriebenen Pfropfcopolymeren und Thermoplasten. Bevorzugt liegt hierbei der Anteil an Polycarbonat zwischen 5 und 95 Gew.-% und der Anteil der Komponenten B1 + B2 zwischen 5 und 95 Gew.-%. Solche Mischungen sind schon im Handel, beispielsweise unter der Handelsbezeichnung Bayblend_ (Bayer) oder Terblend_S (BASF). Es handelt sich dabei um Mischungen eines Polycarbonats mit einem ABS- bzw. ASA-Polymerisat.

Geeignete Polycarbonate sind beispielsweise solche auf Basis von Diphenolen der allgemeinen Struktur HO-Ar-X-Ar-OH, worin Ar einen Arylenrest (Phenylen, Alkylphenylen, halogensubstituiertes Arylen) und X eine Einfachbindung, C₁-C₃-Alkylen, C₂-C₃-Alkyliden, C₃-C₆-Cycloalkyliden sowie -S- oder -SO₂- bedeuten.

Bevorzugte Diphenole der vorstehenden Struktur sind beispielsweise Hydrochinon; Resorcin; 4,4'-Dihydroxybiphenyl; 2,2-Bis(4-hydroxyphenyl)-propan; 2,4-Bis-(4-hydroxy-phenyl)-2-methylbutan; 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)cyclo-hexan. Es handelt sich um bekannte Verbindungen und die sowohl einzeln als auch im Gemisch zur Herstellung der Polycarbonate verwendet werden können.

Geeignete Polycarbonate können in bekannter Weise verzweigt sein, und zwar vorzugsweise durch den Einbau von 0,05 bis 2,0 Mol-%, bezogen auf die Summe der eingesetzten Diphenole, an mindestens trifunktionellen Verbindungen, beispielsweise solchen mit drei oder mehr phenolischen OH-Gruppen.

Als besonders geeignet haben sich Polycarbonate erwiesen, die eine relative Viskosität nᵣₑₗ von 1,10 bis 1,50, insbesondere von 1,25 bis 1,40 aufweisen. Dies entspricht einem mittleren Molekulargewicht M_{w} von 10,000 bis 200,000, vorzugsweise von 20,000 bis 80,000.

Als Polycarbonate P2 im weiteren Sinne können auch Polycarbonat-Polysiloxan-Blockcopolymere, Polycarbonat-Polyether-Blockcopolymere und Polycarbonat-Polyester-Blockcopolymere dienen.

### Weitere Thermoplaste vom Polycarbonat-Typ

Erfindungsgemäß sind weiter als Thermoplaste P2 aromatische Polyester und Polyestercarbonate einsetzbar. Sie bestehen aus mindestens einem aromatischen Bisphenol der allgemeinen Formel (I) aus mindestens einer aromatischen Dicarbonsäure und gegebenenfalls aus Kohlensäure bzw. deren Derivate, wie Phosgen, Dialkyl- und Diarylcarbonat. Geeignete aromatische Dicarbonsäuren sind beispielsweise Orthophthalsäure; Terephthalsäure; Isophthalsäure; tert.-Butylisophthalsäure; 3,3'-Diphenyldicarbonsäure; 4,4'-Diphenyldicarbonsäure; 4,4'-Benzophenondicarbonsäure; 3,4'-Benzophenondicarbonsäure; 4,4'-Diphenyletherdicarbonsäure; 4,4'-Diphenylsulfondicarbonsäure; 2,2-Bis(4-carboxyphenyl)propan; Trimethyl-3-phenylindan-4,5-dicarbonsäure.

Ungeachtet des oben angegebenen Zieles, PVC-freie Folien zu schaffen, sei darauf hingewiesen, daß sich mit den speziellen Blockcopolymeren P1 für spezielle Zwecke auch Mischungen mit einer Hartkomponente herstellen lassen, die halogenierte Polymere wie Polyvinylidenchlorid oder Polyvinylchlorid (PVC) enthält. PVC wird bevorzugt modifiziert eingesetzt. Zur Modifizierung werden niedermolekulare Weichmacher (z.B. Dioctylphthalat, Dioctyladipat) und/oder polymere Verbindungen eingesetzt. Mischungen von PVC mit Weichmachern enthalten in der Regel noch Verarbeitungsstabilisatoren.

Ohne Weichmacher verarbeitbares PVC wird bevorzugt durch (Suspensions-)Pfropfpolymerisation von Vinylchlorid auf einen Elastomer hergestellt. Der Elastomer kann aus Polybutadien- und/oder Polyacrylatkautschuk bestehen.

Weiterhin können eingesetzt werden: Chloriertes Polyethylen; chloriertes Polypropylen; Polyisobutylen; Polyvinylacetat; Polyvinylalkohol; Polyvinylether; Polymethylpenten; Polytetrafluorethylen; Tetrafluorethylen-Perfluorpropylen-Copolymerisate; Copolymerisate von Tetrafluorethylen und Perfluoralkylvinylether; Ethylen-Tetrafluorethylen-Copolymerisate; Polyvinylidenfluorid; Polyvinylfluorid; Polychlortrifluorethylen; Ethylen-Chlortrifluorethylen-Copolymere.

### Cellulosederivate

Für P2 geeignet sind ferner Cellulose-Abkömmlinge wie Celluloseacetat; Cellulosepropionat; Celluloseacetobutyrat.

### Polyphenylenether

Geeignet als Komponente P2 sind die Polyphenylenether mit dem bekannten Strukturbaustein -O-C₆H₄(CH₃)₂-; sie werden bevorzugt durch oxidative Polymerisation unter Kupferkatalyse hergestellt, oder aber auch durch Halogensubstitutionsreaktionen aus den entsprechenden 2,6-Dimethyl-4-halogenphenolen. Sie sind homogen mischbar mit Polystyrol und sehr gut bis homogen mischbar mit den erfindungsgemäßen thermoplastischen Elastomeren. Sie können unmodifiziert oder modifiziert (z.B. mit schlagfestem Polystyrol und/oder Styrol-Butadien-Blockkautschuken) eingesetzt werden. Als Komponente P2 können natürlich auch Polymere Verwendung finden, die der Komponente P1 strukturell ähnlich sind. Beispielsweise können dies lineare und/oder sternförmige Styrol-Butadien-Blockcopolymerisat-Werkstoffe wie Styrolux® (BASF), K-Resin® (Phillips Petroleum) oder Finaclear® (Petrofina) sein.

Als geeignet haben sich auch solche Polymere erwiesen, die, basierend auf den vorstehend genannten Strukturen (Formeln 1 bis 12) einen besonders langen Polystyrolblock S besitzen und damit als eine Art "Verträglichkeitsvermittler" zwischen Komponente P1 und z.B. den oben genannten linearen und/oder sternförmigen Styrol-Butadien-Blockcopolymerisat-Werkstoffen, Polystyrolen (glasklar oder schlagfest), etc. dienen können.

Die erfindungsgemäßen Komponenten P1 und P2 sind in praktisch jedem beliebigen Mischungsverhältnis herstellbar, z.B. von 0,1 bis 99,9 Gew.-% A, bevorzugt 10 bis 90 Gew.-% P1 und 0,1 bis 99,9 Gew.-% B, bevorzugt 10 bis 90 Gew.-% B.

### Komponente P3

Die Bildung von Kondenswassertröpfchen wird Fogging genannt. Je unpolarer die Oberfläche, desto kleiner sind die kondensierten Tropfen und desto stärker wird das Licht an ihnen gestreut mit der Folge, daß Gegenstände hinter dieser Oberfläche nicht mehr oder nur noch undeutlich wahrgenommen werden.

Bei PVC-Folien ist dieser Effekt aufgrund der Polarität des PVC und der darin befindlichen Weichmacher deutlich geringer ausgeprägt. Darüber hinaus wird dieses positive Verhalten durch Zusatz von "Anti-Fogging"-Agenzien verbessert.

Gewöhnliche Anti-Fogging-Agenzien sind jedoch bei Styrol-Polymeren wie BOPS (biaxial orientiertes Polystyrol) fast unwirksam. Daher werden solche Polymeren durch Tauchbäder oder Beschichtungen entsprechend ausgerüstet.

Dies würde im vorliegenden Fall jedoch einen zusätzlichen Arbeitsschritt bedeuten. Es war daher überraschend, daß in der erfindungsgemäßen Folie ein hervorragender Anti-Fogging-Effekt durch Zusatz von gewöhnlichen Anti-Fogging-Agenzien zu beobachten war.

Anti-Fogging-Agenzien sind Verbindungen, die - ähnlich wie Seifen oder Emulgatoren - polare und unpolare Stellen im Molekül aufweisen. Die unpolaren Molekülreste verankern sich i. d. R. im Folienmaterial, die polaren Molekülreste sorgen an der Folienoberfläche für eine erhöhte Polarität. Dadurch werden kondensierte Wassertropfen "gespreitet", d. h. sie verlaufen, werden größer (koaleszieren) und verlaufen schließlich zu einem gleichmäßigen, transparenten, klaren Wasserfilm.

Anti-Fogging-Agenzien im Sinne der Erfindung sind beispielsweise Erdalkalimetall- und Alkalimetallseifen der allgemeinen Formel (1a) oder (1b)

MO₃S-CₙH₂ₙ₊₁ (1a)

MO₂C-CₙH₂ₙ₊₁ (1b)

(M = Na, K, Rb, Cs, NR₄, Ca/2, Mg/2; n = 8-20; R = H, Alkyl, Aryl) sowie Sorbitan-Fettsäureester, Polyoxyethylen-Sorbitan-Fettsäureester, Polyoxyethylen-Sorbitester, Polyoxyethylen-Sorbitol, Polyoxyethylen-Fettsäureester- und -Fettalkohole, Mono- und Di- und Triglyceride der Stearin-, Palmitin-, Laurin-, Myristin- und Ölsäure sowie deren ethoxylierter Derivate, des Polyethylenglykols, Polypropylenglykols und des Pentaerythrits, insbesondere Mono-, Di- und Triester der Stearin-, Palmitin-, Laurin-, Myristin- und Ölsäure, ggf. auch gemischt, sowie ethoxylierte Amine, Fettsäurealkoholamide.

### Komponente P4

Primäre Antioxidantien werden in einer Konzentration von 0,1 bis zu 3 Gew.-%, vorzugsweise von 0,2 bis 10 Gew.-% angewandt. Es kann den Polymeren in jeder bekannten bzw. üblichen Art und Weise beigemengt werden, z.B. in reiner Form direkt bei der Verarbeitung, durch Vormischen von Antioxidans und unstabilisiertem Polymergranulat, durch Vormischen von Antioxidans und Polymerisat in Lösung und gemeinsamen Lösungsmittelentzug (Entgasung) oder in Form eines Konzentrats (Masterbatch).

Unter primären Antioxidantien sind alle auf dem Markt üblichen Stabilisatoren zu verstehen, die einen wärmeinduzierten Radikalangriff des Polymeren reduzieren bzw. verhindern. Sie werden auch als "Verarbeitungsstabilisatoren" beschrieben und dienen vorwiegend dem Schutz des Polymeren bei dessen Synthese, Aufarbeitung und Verarbeitung.

Vorzugsweise handelt es sich hierbei um i. d. R. ein sterisch gehinderte Phenole. Dies sind Verbindungen mit Phenolstruktur, die in Nachbarstellung (2,6-Stellung) zum phenolischen Hydroxylrest alkylsubstituiert sind, wobei Alkyl in diesem Falle bevorzugt tertiär-Butyl ("t-Butyl") oder Alkyl-t-butyl bedeutet.

Beispielsweise sind folgende Verbindungen geeignet, die z.T. außer der typischen Phenolstruktur noch Strukturelemente aufweisen, die nach einem anderen Mechanismus stabilisierend wirken:
α-,β-,γ-Tocopherol; 2,6-Dimethylphenol; 2,6-Di-t-butylphenol;
2,6-Di-t-butyl-4-methylphenol;
n-Octadecyl-3-(3,5-di-t-butyl-4-hydroxyphenyl)-propionat;
Tetrakis-[3-(3,5-di-t-butyl-4-hydroxyphenyl)-propionyloxymethyl]-methan;
2- (2-Hydroxy-3-t-butyl-5-methylbenzyl-4-methyl-6-t-butylphenyl-(meth)acrylat;
2-(3,5-Di-t-butyl-4-hydroxybenzyl)-4-methylphenyl(meth)acrylat;
2-(3,5-Di-t-butyl-4-hydroxybenzyl)-4-ethylphenyl(meth)acrylat;
2-(3,5-Di-t-butyl-4-hydroxybenzyl)-phenyl(meth)acrylat;
2,6-Bis(2-hydroxy-3-t-butyl-5-methylbenzyl).

Besonders bevorzugt sind 2-(2-Hydroxy-3-t-5-methylbenzyl)-4-methyl-6-t-butyl-phenylacrylat; 2, 6-Di-t-butylphenol; n-Octadecyl-3-(3,5-di-t-butyl-4-hydroxyphenyl)propionat und - Tocopherol.

In -Stellung nur einfach substituierte oder unsubstituierte Phenole sind nur begrenzt verwendbar, da sie bei der Verarbeitung zu deutlichen Gelbfärbungen führen können.

Oftmals werden Mischungen aus 2 oder mehr phenolischen Verbindungen eingesetzt, die dann einen synergistischen Effekt hinsichtlich des Oxidationsschutzes aufweisen können.

Geeignete primäre Antioxidantien sind beispielsweise unter den Handelsnamen Irganox 1076 oder Irganox 3052 (Ciba Additives) oder entsprechender Produkte anderer Hersteller erhältlich. Naturprodukten nachgebildete Stabilisatoren wie -Tocopherol sind ebenfalls gut geeignet.

### Komponente P5

Sekundäre Antioxidantien werden in der Regel in Ergänzung zu primären Antioxidantien verwendet. Während die Anwesenheit primärer Antioxidantien, insbesondere bei der Polymerherstellung und Verarbeitung notwendig ist, können sekundäre Antioxidantien wahlweise zugesetzt werden. Ohne diese sekundären Antioxidantien beobachtet man oftmals eine Gelbfärbung der erfindungsgemäßen Polymerisate.

Als sekundäre Antioxidantien können u. a. verwendet werden:

### Thioharnstoff, Distearylthiodipropionat sowie bevorzugt Phosphorverbindungen (Phosphite)

Organische Phosphite werden in einer Menge von bis zu 5 Gew.-% vorzugsweise von 0,3 bis 2 Gew.-% zugesetzt. Besonders wirksam sind beispielsweise Phosphite der allgemeinen Formel (RO)₃P, in denen R gleiche oder verschiedene Alkyl-, Alkylaryl-, Aryl- oder Cycloalkylreste bedeutet. Beispiele sind Trimethylphosphit, Triphenylphosphit, Tris(nonylphenyl)phosphit, Tris(2,4-dimethyl-phenyl)phosphit, Diphenyldecylphosphit, Didecylphenylphosphit, Phenyldi(2-ethylhexyl)phosphit, Methyldiphenylphosphit, Phenyl-dicyclohexylphosphit, Diisopropylphenylphosphit, Diethyl-phenylphosphit, Di(2-ethylcyclohexyl)-n-butylphosphit, 3-Cyclopentylpropyldihexylphosphit. Bevorzugt wird Tris(nonylphenyl)-phosphit (gewöhnlich als "TNPP" bezeichnet) eingesetzt.

Nach einer besonders bevorzugten Ausführungsform wird das organische Phosphit seinerseits durch Zusatz einer Aminverbindung stabilisiert, insbesondere wird Triisopropanolamin in einer Menge von 0,1 bis 5 Gew.-%, bezogen auf 100 Gew.-% organisches Phosphit zugesetzt, das somit im Copolymerisat nur in ganz geringer Menge vorhanden ist.

### Komponente P6

Als Komponente P6 können weitere Zusatzstoffe in Mengen bis zu 50 Gew.-%, bevorzugt bis zu 10 Gew.-%, zugesetzt werden. Nur beispielhaft seien genannt: Aliphatische und aromatische Carbon- und Sulfonsäuren.

Bis(stearoylethylendiamin), Adipinsäureester und Phthalsäureester mit unterschiedlichen Kettenlängen, aliphatische und aliphatisch-aromatische Kohlenwasserstoffe (Weißöle, Paraffine), Siliconöle.

Andere typische Hilfsmittel sind z.B. handelsübliche Alkylsulfonate (Hostastat; Hoechst) oder quaternäre Ammoniumsalze (Mecostat sowie Dehydad; Merck), Stearoyldiethanolamin oder Kokosfettdiethanolamin; Pigmente, wie z.B. Titandioxid, Ruß, Farbpigmente und Farbstoffe. Weiterhin können Glasfasern, Kohlenstoffasern, mineralische Füllstoffe (Kreide, Dolomit, Talk etc.) und sonstige Füllstoffe enthalten sein, die für die genannten Polymere typisch sind und dem Fachmann im allgemeinen bekannt sind.

Außerdem können weitere Zusätze vorhanden sein, wie z.B. weitere anorganische und/oder organische Stabilisatoren. Beispielhaft seien genannt Calciumstearat, Zinkstearat, Erucasäureamid, Mikrohartwachs (z.B. Be Square der Fa. Petrolite Polymers) oder Mineralöl. Weiterhin enthalten können sein: zusätzliche, nichtphenolische und nichtphosphitische Stabilisatoren, W-Stabilisatoren, "HALS"-(=hindered amine light stabilizer)-Verbindungen, Benzophenonderivate, Triazolderivate, Nickelquencher oder andere übliche UV-Stabilisatoren oder Lichtschutzmitteln. Oftmals ergeben bestimmte Kombinationen primärer Antioxidantien (P4), wie z.B. α-Tocopherol, mit Lichtschutzmitteln oder UV-Stabilisatoren (nur beispielhaft sei genannt: Tinuvin® P der Ciba Geigy oder Lowinox® P55 der GreatLakes als Vertreter der Klasse der Benzotriazole) besondere synergistische Wirkungen hinsichtlich Vergilbung, Kern- und Langzeitstabilität.

Weiterhin können Weichmacher und Gleitmittel, wie beispielsweise Stearinsäure, Stearate, Palmitate, Myristate, Laurate, Glycerin- mono-, di- und tristearate, Erucasäure und -amide, Mikrohartwachse, Bis(stearoylethylendiamin), Adipinsäureester und Phthalsäureester mit unterschiedlichen Kettenlängen, aliphatische und aliphatisch-aromatische Kohlenwasserstoffe (Weißöle, Paraffine), Siliconöle verwendet werden.

Andere typische Hilfsmittel sind z.B. Antistatika wie Alkylsulfonate (Hostastat®; Hoechst) oder quaternäre Ammoniumsalze (Mecostat® sowie Dehydad®; Merck), Stearoyldiethanolamin oder Kokosfettdiethanolamin; Pigmente, wie z.B. Titandioxid, Ruß, Farbpigmente und Farbstoffe. Weiterhin können Glasfasern, Kohlenstoffasern, mineralische Füllstoffe (Kreide, Dolomit, Talk etc.) und sonstige Füllstoffe enthalten sein, die für die genannten Polymere typisch sind und dem Fachmann im allgemeinen bekannt sind.

Die erfindungsgemäßen Mischungen können auf jede übliche Weise erhalten werden, z.B. durch gemeinsame Extrusion und Kalandrieren. Die Extrusion kann auf Ein- oder Doppelschneckenextrudern durchgeführt werden. Das Kalandrieren erfolgt zweckmäßigerweise zunächst auf Knetern oder Extrudern (Plastifizieren), ggf. auch auf Mischwalzen mit anschließendem eigentlichem Kalandrierprozeß ggf. unter Zusatz geeigneter Stabilisatoren. Blasformen, Spritzgießen geschieht auf üblichen Maschinen. Insbesondere Dünnfolien im Bereich von 5 bis 200 µm sind u.U. sehr zäh und zeigen ein hohes Rückstellvermögen. Dünnfolien werden durch Castfilm-, Schlauchfolien-, Chill-Roll- oder andere übliche Verfahren hergestellt.

Besonders hochwertige Folien werden durch Coextrusion hergestellt. Allerdings können Coextrudate z.B. auch durch Blasformen erhalten werden. Die Coextrusion dient der Kombination von Eigenschaften. Die Anzahl der Schichten ist dabei genau wie die Anzahl der verwendeten Komponenten im Rahmen der technischen Möglichkeiten frei wählbar. Als Komponenten für die Coextrusion kommen dabei alle bereits als Mischungspartner gemäß Anspruch 1 genannten Polymeren in Frage. Bevorzugt sind jedoch solche, deren Eigenschaften die des elastischen Blockcopolymerisats entsprechend den in den Ansprüchen angegebenen Kombinationen ergänzen. Besonders bevorzugt sind thermoplastische Elastomere. Solche Coextrusionsstrukturen können aus 2, 3 oder mehreren Schichten beliebiger Reihenfolge und beliebiger Dicke bestehen. Es können Coex-Strukturen mit oder ohne Haftvermittler hergestellt werden. Bevorzugt wird Komponente P1 pur oder in Mischung mit Komponente P2 für eine Schicht A eingesetzt und für Schicht B ein beliebiges Polymer. Beispiele für Schichtaufbauten sind:
1) Schicht A/Schicht B
2) Schicht A/Schicht B/Schicht A
3) Schicht B/Schicht A/Schicht B
4) Schicht A/Schicht B/Schicht A/Schicht B
5) Schicht B/Schicht A/Schicht B/Schicht A

Treten in einer Struktur mehrere Schichten A und B auf, so bedeutet dies nicht, daß die Zusammensetzung der jeweiligen Schichten identisch ist. Bevorzugt werden auch unterschiedlich zusammengesetzte Schichten A bzw. B (z.B. in Strukturen 4 und 5) eingesetzt.

Bevorzugt werden als Coextrusions-Schichten B teilkristalline Polymere wie Polyethylen, Polypropylen, Polyamid oder auch Ethylen-Vinylacetat-Copolymere, Ethylen-Vinylalkohol-Copolymere, Polyester wie PETG (ein Polyethylenterephthalat-Copolymer das z.B. unter der Handelsbezeichnung Kodar 6761, Eastman Kodak erhältlich ist), Polyethylenterephthalat oder Polybutylenterephthalat eingesetzt. Technisch besonders wichtige Strukturen sind z.B. die in der vorstehenden Aufzählung unter 2) und 3) genannten.

Besonders bevorzugt ist ein Verbund mit dem Aufbau Polypropylen/thermoplastisches Elastomer/Polypropylen (A/B/A-Aufbau, wobei das thermoplastische Elastomer auch als Mischung mit Thermoplasten angewendet werden kann). Ein solcher Verbundwerkstoff ist ein neuer Werkstoff und zeichnet sich - bevorzugt als Folie und insbesondere als Breitschlitz- und Chill-Roll-Folie - durch sehr hohe Zähigkeit und einen guten Rückstelleffekt ("Memory Effekt") aus. Dieser Rückstelleffekt ist um so ausgeprägter, je geringer die Orientierung des Materials (durch hohes Aufblasverhältnis oder hohe Abzugsgeschwindigkeit) ist. Dieser Verbund eignet sich als PVC-Ersatzfolie. Bevorzugt liegt die Gesamtdicke des Verbunds bei der Breitschlitzfolie zwischen 100 und 2000 µm, bei Chill-Roll- und Schlauchfolie zwischen 5 und 200, bevorzugt zwischen 10 und 30 µm, wobei der Anteil des thermoplastischen Elastomers am gesamten Verbund z.B. 20 bis 95, bevorzugt 40 bis 95 und insbesondere 50 bis 90 Gew.-% beträgt. Dabei besteht die Mittelschicht B aus einer Mischung von thermoplastischem Elastomer mit bis zu 80 Gew.%, bevorzugt bis zu 50 Gew.%, besonders bevorzugt bis zu 30 Gew.% des thermoplastischen Polymeren. Ähnliche Eigenschaften wie oben beschrieben lassen sich auch mit dem Verbund Polyethylen-thermoplastisches Elastomerpolyethylen erzielen, wobei die obengenannten Eigenschaften und Mengenanteile gelten.

Weitere Verbunde sind etwa:

Polypropylen/thermoplastisches Elastomer/Polyethylen; Polyamid/thermoplastisches Elastomer/Polyethylen; Polyamid/thermoplastisches Elastomer/Polypropylen; PETG/thermoplastisches Elastomer/PETG; Thermoplastisches Elastomer/EVA-Copolymer/Polyethylen sowie jeweils infragekommende Mischungen mit Thermoplasten.

Alle vorstehend beschriebenen Verbunde können mit oder ohne Haftvermittler hergestellt werden. Werden Mischungen mit Thermoplasten eingesetzt, so haben sich insbesondere Glasklar-Polystyrol, Schlagfest-Polystyrol, Styrol-Butadien-Blockcopolymere einzeln oder in Mischung als geeignete Thermoplasten erwiesen.

Die erfindungsgemäßen Mischungen (Formmassen) dienen zur Herstellung von Formteilen und Halbzeug wie beispielsweise Folien aller Art wie Chill-Roll-, Coextrusions-, Schlauchfolien, Breitschlitzfolien, Kalanderfolien, Walzfelle; Faltenbälgen, Gummibälgen, Matten, Decken, Fußbodenbelägen, Schuhsohlen, Teppichbodenrückseiten, Kunstleder, Automobil-Crash-Pad-Folien, Reifen, Blutbeuteln, Infusionsvorratsbehältern, Kaschierfolien, elastischen Folienstücken für WindeIn, Spielwaren, Latex-Ersatzprodukten usw. Insbesondere seien genannt: Folien für die Verpackung (Fleisch-, Obst-, Gemüse-Verpackung, Umschrumpffolien, Sleeves).

Die erfindungsgemäßen Mischungen können auf jede übliche Weise erhalten werden, z.B. durch gemeinsame Extrusion, Kalandrieren o.ä. Die Extrusion kann auf Ein- oder Doppelschneckenextrudern durchgeführt werden. Das Kalandrieren erfolgt zweckmäßigerweise zunächst auf Knetern oder Extrudern (Plastifizieren), ggf. auch auf Mischwalzen mit anschließendem eigentlichem Kalandrierprozeß ggf. unter Zusatz geeigneter Stabilisatoren. Blasformen, Spritzgießen geschieht auf üblichen Maschinen. Insbesondere Dünnfolien im Bereich von 5 bis 200 µm sind, je nach Anteil an Komponente A, sehr zäh und zeigen ein hohes Rückstellvermögen. Dünnfolien werden durch Castfilm-, Schlauchfolien-, Chill-Roll- oder andere übliche Verfahren hergestellt.

Besonders hochwertige Folien werden durch Coextrusion hergestellt. Allerdings können Coextrudate z.B. auch durch Blasformen erhalten werden. Die Coextrusion dient der Kombination von Eigenschaften. Die Anzahl der Schichten ist dabei genau wie die Anzahl der verwendeten Komponenten im Rahmen der technischen Möglichkeiten frei wählbar. Als Komponenten für die Coextrusion kommen dabei alle bereits als Mischungspartner gemäß Anspruch 1 genannten Polymeren in Frage. Bevorzugt sind jedoch solche, deren Eigenschaften die des elastischen Blockcopolymerisats entsprechend Anspruch 1-11 ergänzen. Besonders bevorzugt sind thermoplastische Elastomere. Solche Coextrusionsstrukturen können aus 2, 3 oder mehreren Schichten beliebiger Reihenfolge und beliebiger Dicke bestehen. Es können Coex-Strukturen mit oder ohne Haftvermittler hergestellt werden. Bevorzugt wird Komponente P1 pur oder in Mischung mit Komponente P2 für eine Schicht A eingesetzt und für Schicht B ein beliebiges Polymer. Beispiele für Schichtaufbauten sind:

Treten in einer Struktur mehrere Schichten A und B auf, so bedeutet dies nicht, daß die Zusammensetzung der jeweiligen Schichten identisch ist. Bevorzugt werden auch unterschiedlich zusammengesetzte Schichten A bzw. B (z.B. in Strukturen 4 und 5) eingesetzt.

Bevorzugt werden als Coextrusions-Schichten B teilkristalline Polymere wie Polyethylen, Polypropylen, Polyamid oder auch Ethylen-Vinylacetat-Copolymere, Ethylen-Vinylalkohol-Copolymere, Polyester wie PETG (ein Polyethylenterephthalat-Copolymer das z.B. unter der Handelsbezeichnung Kodar® 6761, Eastman Kodak erhältlich ist), Polyethylenterephthalat oder Polybutylenterephthalat eingesetzt. Technisch besonders wichtige Strukturen sind z.B die in der vorstehenden Aufzählung als Nr. 2 und Nr. 3 genannten.

Besonders bevorzugt ist ein Verbund mit dem Aufbau Polypropylen/thermoplastisches Elastomer/Polypropylen (A/B/A-Aufbau, wobei das thermoplastische Elastomer auch als Mischung mit Thermoplasten angewendet werden kann).

Der Neue Verbundwerkstoff zeichnet sich - bevorzugt als Folie und insbesondere als Breitschlitz- und Chill-Roll-Folie - durch sehr hohe Zähigkeit und einen guten Rückstelleffekt ("Memory Effekt") aus. Dieser Rückstelleffekt ist um so ausgeprägter, je geringer die Orientierung des Materials (durch hohes Aufblasverhältnis oder hohe Abzugsgeschwindigkeit) ist. Dieser Verbund eignet sich als PVC-Ersatzfolie. Bevorzugt liegt die Gesamtdicke des Verbunds bei der Breitschlitzfolie zwischen 0,1 und 2 mm, bei Chill-Roll- und Schlauchfolie zwischen 0,05 und 0,2, bevorzugt zwischen 0,1 und 0,30 mm, wobei der Anteil des thermoplastischen Elastomers am gesamten Verbund z.B. 20-95, bevorzugt 40-95 und insbesondere 50-90 Gew.-% beträgt. Dabei besteht die Mittelschicht B aus einer Mischung von thermoplastischem Elastomer mit bis zu 80 Gew.-%, bevorzugt bis zu 50 Gew.-%, besonders bevorzugt bis zu 30 Gew.-% des thermoplastischen Polymeren. Ähnliche Eigenschaften wie oben beschrieben lassen sich auch mit dem Verbund Polyethylen-thermoplastisches Elastomer-Polyethylen erzielen, wobei die obengenannten Eigenschaften und Mengenanteile gelten.

Weitere Verbunde sind etwa:
Polypropylen/thermoplastisches Elastomer/Polyethylen;
Polyamid/thermoplastisches Elastomer/Polyethylen;
Polyamid/thermoplastisches Elastomer/Polypropylen;
PETG/thermoplastisches Elastomer/PETG;
Thermoplastisches Elastomer/EVA-Copolymer/Polyethylen;
sowie jeweils infragekommende Mischungen mit Thermoplasten.

Alle vorstehend beschriebenen Verbunde können mit oder ohne Haftvermittler hergestellt werden. Werden Mischungen mit Thermoplasten eingesetzt, so haben sich insbesondere Glasklar-Polystyrol, Schlagfest-Polystyrol, Styrol-Butadien-Blockcopolymere einzeln oder in Mischung als geeignete Thermoplasten erwiesen.

Die erfindungsgemäßen Mischungen (Formmassen) dienen zur Herstellung von Formteilen und Halbzeug wie beispielsweise Folien aller Art wie Chill-Roll-, Coextrusions-, Schlauchfolien, Breitschlitzfolien, Kalanderfolien, Walzfelle; Faltenbälgen, Gummibälgen, Matten, Decken, Fußbodenbelägen, Schuhsohlen, Teppichbodenrückseiten, Kunstleder, Automobil-Crash-pad-Folien, Reifen, Blutbeuteln, Infusionsvorratsbehältern, Kaschierfolien, elastischen Folienstücken für Windeln, Spielwaren, Latex-Ersatzprodukten usw.

Insbesondere seien genannt: Folien für die Verpackung (Fleisch-, Obst-, Gemüse-Verpackung, Umschrumpffolien, Sleeves).

Diese können nach geeigneten Verfahren wie Mono- und Coextrusion von Schlauchfolien, Chill-Roll-Folien, Breitschlitzfolien; durch Kalandrieren, Spritzgießen, Blasformen und weitere hier nicht genannte geeignete Verfahren hergestellt werden.

### Beispiele

Zur Verwendung als Komponente P1 wurde ein erfindungsgemäßes thermoplastisches Blockcopolymerisat auf folgende Weise hergestellt:

Ein beheiz- und kühlbarer 50-1-Edelstahlreaktor, der mit einem Kreuzbalkenrührer ausgerüstet war, wurde durch Spülen mit Stickstoff, Auskochen mit einer Lösung von sec-Butyllithium und 1,1-Diphenylethylen in Cyclohexan (Molverhältnis 1:1) und Trocknen vorbereitet. Dann wurden 22,8 1 Cyclohexan eingefüllt und 42 ml s-Butyllithium als Initiator, 65.8 ml Tetrahydrofuran und die in der nachstehenden Tabelle 1 angegebenen Mengen Styrol (S) und Butadien (B) nach dem angegebenen Zeittaktprogramm zugesetzt. Angegeben ist die Polymerisationsdauer t in Minuten sowie Anfangs- und Endtemperatur T_{A} bzw. T_{E} (in °C), wobei darauf hinzuweisen ist, daß die Polymerisationsdauer stets groß gegen die Dauer des Monomerzulaufs war. Als Antioxidantien wurden 0,5 % des vorerwähnten Handelsprodukts Irganox 3052 (P4) und 0,85 % Trisnonylphenylphosphit (P5) zugegeben.

**Tabelle 1**

| t [min] | 30 | 17 | 12 | 6 | 14 |
|---|---|---|---|---|---|
| S [g] | 1008 | 1412 | 1412 | 1412 | 1008 |
| B [g] | - | 1120 | 1120 | 1120 | - |
| T_{A} [°C] | 30 | 68 | 60 | 64 | 70 |
| T_{E} [°C] | 70 | 96 | 84 | 83 | 76 |

Die erhaltene Polymerlösung wurde jeweils vom Lösungsmittel befreit, mit 0,5 % eines Gleitmittels P6 (mikrokristallines Hartwachs BeSquare 195; Petrolite) versetzt, in einer Knetmaschine (Werner u. Pfleiderer; ZSK 30) entgast und granuliert.

Die Folienstärke wurde unabhängig von der Art der Folie einheitlich auf 0,016 mm (16 µm) eingestellt.
Komponente P2-1: Polystyrol (Polystyrol 144 C; BASF).
Komponente P2-2: Styrol-Butadien-Blockcopolymer (Styrolux 684 D);
Komponente P2-3: Ethylen-Vinylacetat-Copolymer mit 8 % Vinylacetat; Schmelzindex MVR_{(190°C/2,16kg)} = 4 [g/10min)
Komponente P3: Glycerinmonooleat
Komponente P4: - siehe oben
Komponente P5: - siehe oben
Komponente P6: - siehe oben

**Tabelle 2**

| Versuchsergebnisse | | | | | | |
|---|---|---|---|---|---|---|
| Beispiel | 1 | 2 | 3 | 4 | V1 | V2 |
| P1 | 83,7 | 83,7 | 50,0 | 40,5 | 98,2 | 84,1 |
| P2-1 | 13,8 | 6,9 | 8,8 | 8,8 | 0 | 6,9 |
| P2-2 | 0 | 6,9 | 39,2 | 49,0 | 0 | 6,9 |
| P3 | 1 | 1 | 1 | 1 | 0 | 1 |
| P4 | 0,4 | 0,4 | 0,3 | 0,2 | 0,5 | 0,4 |
| P5 | 0,7 | 0,7 | 0,4 | 0,3 | 0,8 | 0,7 |
| P6 | 0,4 | 0,4 | 0,3 | 0,2 | 0,5 | 0 |
| Transparenz¹⁾ | 86 | 86 | 83 | 83 | 88 | 86 |
| Antifog-Wirkung²⁾ | 2 | 2 | 2 | 2 | 5 | 2 |
| Dart Drop³⁾ [g] | 700 | 720 | 635 | 540 | 720 | 700 |
| Schrumpf⁴⁾ [%] | 3 | 1,5 | 1,5 | 1,5 | 6 | 1,5 |
| Verblockneigung | nein | nein | nein | nein | nein | ja |

| | | | | | | |
|---|---|---|---|---|---|---|
| 1) : 2mm Dicke | | | | | | |
| 2): 5: keine Wirkung; 1: sehr gute Wirkung | | | | | | |
| 3): bestimmt nach ASTM-D 1709 | | | | | | |
| 4): 1-monatige Lagerung b.25°C | | | | | | |

## Patentansprüche

1. Folie in Rollenform, insbesondere für die Lebensmittelverpackung, enthaltend,
P1: 15 bis 99,6 Gew. % eines kautschukelastischen Blockcopolymerisats P1 aus mindestens einem einpolymerisierte Einheiten eines vinylaromatischen Monomeren aufweisenden, eine Hartphase bildenden Block S und mindestens einem sowohl einpolymerisierte Einheiten eines vinylaromatischen Monomeren (S) wie eines Diens (B) aufweisenden elastomeren, eine Weichphase bildenden Block B/S, wobei S für den vinylaromatischen Block und B/S für die Weichphase, also den statistisch aus Dien- und vinylaromatischen Einheiten aufgebauten Block steht und wobei die Glastemperatur T_{g} des Blocks S über 25°C und die des Blocks B/S unter 25°C liegt und das Phasenvolumen-Verhältnis von Block S zu Block B/S so gewählt ist, daß der Anteil der Hartphase am gesamten Blockcopolymerisat 1 bis 40 Volumen-% und der Gewichtsanteil des Diens weniger als 50 Gew.% beträgt,
P2: 15 bis 99,6 % eines thermoplastischen Polymeren P2,
P3: 0,1 bis 10 % eines Anti-Fogging-Agens P3,
P4: 0,1 bis 5 % eines primären Antioxidans P4,
P5: 0,1 bis 5 % eines sekundären Antioxidans P5 und
P6: 0,1 bis 50 % weitere Hilfsstoffen.

2. Folie nach Anspruch 1, **dadurch gekennzeichnet, daß** die Folienrolle während dreimonatiger Lagerdauer bei 25°C quer zur Abzugsrichtung um nicht mehr als 3 % schrumpft.

3. Folie nach Anspruch 1, enthaltend P1 bis P5 in den folgenden Gewichtsanteilen:
P1: 30 bis 90 %,
P2: 30 bis 90 %,
P3: 0,5 bis 5 %,
P4: 0,5 bis 5 %,
P5: 0,5 bis 5 %,
P6: 0,5 bis 25 %.

4. Folie nach Anspruch 1, enthaltend in der Weichphase P1 ein statistisches Blockcopolymerisat auf der Grundlage von Styrol und Butadien.

5. Folie nach Anspruch 2, enthaltend als thermoplastisches Polymerisat P2 ein Styrolhomopolymerisat, schlagzäh modifiziertes Styrolhomopolymerisat oder ein Styrol-Butadien-Blockcopolymerisat mit einer Glastemperatur T_{g} über 25°C.

6. Folie nach Anspruch 1, enthaltend ein Blockpolymerisat P1, wie es erhalten wird durch anionische Polymerisation, wobei mindestens die Polymerisation der Weichphase in Gegenwart eines polaren Cosolvens vorgenommen worden ist.

7. Folie nach Anspruch 1, enthaltend ein Blockcopolymerisat P1, das mehrere Blöcke B/S mit unterschiedlicher Molmasse je Molekül aufweist.

8. Folie nach Anspruch 1, enthaltend ein Blockcopolymerisat P1, dargestellt durch eine oder mehrere der allgemeinen Formeln (1) bis (12)
(1) S-B/S-S;
(2) (S-B/S)ₙ;
(3) (S-B/S)ₙ-S;
(4) B/S-(S-B/S)ₙ;
(5) X-[(S-B/S)ₙ]ₘ₊₁;
(6) X-[(B/S-S)ₙ]ₘ₊₁;
(7) X-[(S-B/S)ₙ-S]ₘ₊₁;
(8) X-[(B/S-S)ₙ-B/S]ₘ₊₁;
(9) Y-[(S-B/S)ₙ]ₘ₊₁;
(10) Y-[(B/S-S)ₙ]ₘ₊₁;
(11) Y-[(S-B/S)ₙ-S]ₘ₊₁;
(12) Y-[(B/S-S)ₙ-B/S]ₘ₊₁;
wobei X den Rest eines n-funktionellen Initiators, Y den Rest eines m-funktionellen Kopplungsmittels und m und n natürliche Zahlen von 1 bis 10 bedeuten.

9. Folie nach Anspruch 1, enthaltend ein Blockcopolymerisat mit einer der allgemeinen Formeln X-[-B/S-S]₂ und Y-[-B/S-S]₂.

10. Folie nach Anspruch 1, enthaltend ein Blockcopolymerisat, dessen Weichphase unterteilt ist in Blöcke
(13) (B/S)₁-(Bindestrich) (B/S)₂,
(14) (B/S)₁-(Bindestrich) (B/S)₂ -(Bindstrich) (B/S)₁
oder
(15) (B/S)₁-(Bindestrich) (B/S)₂ -(Bindestrich) (B/S)₃,
wobei die Indices 1, 2, 3...unterschiedliche Strukturen in dem Sinne bedeuten, daß das Vinylaromat/Dien-(S/B)-Verhältnis in den einzelnen Blöcken B/S unterschiedlich ist oder sich innerhalb eines Blocks in den Grenzen (B/S)₁-(B/S)₂ kontinuierlich ändert, wobei die Glasübergangstemperatur T_{g} jedes Teilblocks unter 25°C liegt.

11. Coextrudat aus mindestens zwei Schichten beliebiger Dicke, wobei mindestens eine Schicht aus der Folie nach Anspruch 1 und mindestens eine Schicht aus einem thermoplastisch verarbeitbaren Polymerisat besteht.

12. Coextrudat aus mindestens zwei Schichten beliebiger Dicke, wobei mindestens eine Schicht aus der Folie nach Anspruch 1 und mindestens eine Schicht aus einem teilkristallinen Polymerisat besteht.

13. Coextrudat nach einem der Ansprüche 11 und 12, wobei ein Schichtaufbau P1/P2/P1 oder P2/P1P/P2 vorliegt und P2 ausgewählt ist aus Polyethylen, Polypropylen, Polyethylenterephthalat, Polybutylenterephthalat und Polyamid.

14. Verfahren zur Herstellung einer, ein Blockcopolymerisat nach Anspruch 1 enthaltenden, Verpackungsfolie durch Extrusion einer entsprechenden Formmasse.

15. Verwendung einer Folie nach einem der Ansprüche 1 bis 10 zum Verpacken von Lebensmitteln.

16. Verwendung einer Folie nach einem der Ansprüche 1 bis 10 als Ersatz für eine Folie aus Polyvinylchlorid.

## Claims

1. A film in roll form, in particular for food packaging, comprising
P1: from 15 to 99.6 % by weight of an elastomeric block copolymer P1 made from at least one block S which forms a hard phase and incorporates units of a vinylaromatic monomer, and at least one elastomeric block B/S which forms a soft phase and incorporates both units of a vinylaromatic monomer (S) and of a diene (B), where S is the vinylaromatic block and B/S is the soft phase, ie. the block built up randomly from diene units and vinylaromatic units, and where the glass transition temperature T_{g} of the block S is above 25°C and that of the block B/S is below 25°C and the phase volume ratio of block S to block B/S is selected so that the proportion of hard phase in the entire block copolymer is from 1 to 40 % by volume and the proportion of the diene is less than 50 % by weight,
P2: from 15 to 99.6 % of a thermoplastic polymer P2,
P3: from 0.1 to 10 % of an antifogging agent P3,
P4: from 0.1 to 5 % of a primary antioxidant P4,
P5: from 0.1 to 5 % of a secondary antioxidant P5 and
P6: from 0.1 to 50 % of other auxiliaries.

2. A film as claimed in claim 1, wherein the roll of film shrinks perpendicularly to the direction of take-off by not more than 3 % during a storage period of three months at 25°C.

3. A film as claimed in claim 1, comprising the following proportions by weight of P1 to P6:
P1: from 30 to 90 %,
P2: from 30 to 90 %,
P3: from 0.5 to 5 %,
P4: from 0.5 to 5 %,
P5: from 0.5 to 5 %,
P6: 0.5 to 25 %.

4. A film as claimed in claim 1, containing, in the soft phase P1, a random block copolymer based on styrene and butadiene.

5. A film as claimed in claim 2, containing, as thermoplastic polymer P2, a styrene homopolymer, an impact-modified styrene homopolymer or a styrene-butadiene block copolymer having a glass transition temperature T_{g} above 25°C.

6. A film as claimed in claim 1, containing a block polymer P1 as obtained by anionic polymerization, where at least the polymerization of the soft phase has been undertaken in the presence of a polar cosolvent.

7. A film as claimed in claim 1, containing a block copolymer P1 which has more than one block B/S having differing molar mass per molecule.

8. A film as claimed in claim 1, containing a block copolymer P1 represented by one or more of the formulae (1) to (12)
(1) S-B/S-S;
(2) (S-B/S)ₙ;
(3) (S-B/S)ₙ-S;
(4) B/S-(S-B/S)ₙ;
(5) X-[(S-B/S)ₙ]ₘ₊₁;
(6) X-[(B/S-S)ₙ]ₘ₊₁;
(7) X-[(S-B/S)ₙ-S]ₘ₊₁;
(8) X-[(B/S-S)ₙ-B/S]ₘ₊₁;
(9) Y-[(S-B/S)ₙ]ₘ₊₁;
(10) Y-[(B/S-S)ₙ]ₘ₊₁;
(11) Y-[(S-B/S)ₙ-S]ₘ₊₁;
(12) Y-[(B/S-S)ₙ-B/S]ₘ₊₁;
where X is the radical of an n-functional initiator, Y is the radical of an m-functional coupling agent and m and n are natural numbers from 1 to 10.

9. A film as claimed in claim 1, containing a block copolymer having one of the formulae X-[-B/S-S]₂ and Y-[-B/S-S]₂.

10. A film as claimed in claim 1, containing a block copolymer whose soft phase is subdivided into blocks
(13) (B/S)₁-(B/S)₂,
(14) (B/S)₁-(B/S)₂-(B/S)₁
or
(15) (B/S)₁-(B/S)₂-(B/S)₃,
where the indices 1, 2, 3...indicate differing structures in the sense that the vinylaromatic compound/diene (S/B) ratio in the individual blocks B/S differs or changes continuously within a block within the limits (B/S)₁-(B/S)₂, where the glass transition temperature T_{g} of each subblock is below 25°C.

11. A coextrudate made from at least two layers of any desired thickness, where at least one layer is composed of the film as claimed in claim 1 and at least one layer is composed of a polymer which is processable as a thermoplastic.

12. A coextrudate made from at least two layers of any desired thickness, where at least one layer is composed of the film as claimed in claim 1 and at least one layer is composed of a partially crystalline polymer.

13. A coextrudate as claimed in claim 11 or 12, where there is a layer structure P1/P2/P1 or P2/P1/P2, and P2 is selected from the class consisting of polyethylene, polypropylene, polyethylene terephthalate, polybutylene terephthalate and polyamide.

14. A process for producing a packaging film comprising a block copolymer as claimed in claim 1, by extruding an appropriate molding composition.

15. The use of a film as claimed in any one of claims 1 to 10 for packaging foods.

16. The use of a film as claimed in any one of claims 1 to 10 as a substitute for a film made from polyvinyl chloride.

## Revendications

1. Feuille en forme de rouleau, en particulier pour l'emballage d'aliments, contenant
P1 : 15 à 99,6% en poids d'un copolymère bloc élastique comme du caoutchouc P1 à base d'au moins un bloc S présentant des unités copolymérisées d'un monomère vinylaromatique et formant une phase dure et d'au moins un bloc B/S élastomère présentant des unités copolymérisées aussi bien d'un monomère vinylaromatique (S) que d'un diène (B) et formant une phase molle, S représentant le bloc vinylaromatique et B/S la phase molle, donc le bloc constitué de manière statistique d'unités diéniques et vinylaromatiques, la température de transition vitreuse T_{g} du bloc S étant supérieure à 25°C et celle du bloc B/S inférieure à 25°C, le rapport volumique des phases entre le bloc S et le bloc B/S étant choisi de façon que la fraction de la phase dure par rapport à la totalité du copolymère bloc soit de 1 à 40% en volume et la fraction pondérale du diène soit inférieure à 50% en poids,
P2 : 15 à 99,6% d'un polymère thermoplastique P2,
P3 : 0,1 à 10% d'un agent antibuée P3,
P4 : 0,1 à 5% d'un antioxydant primaire P4,
P5 : 0,1 à 5% d'un antioxydant secondaire P5, et
P6: 0,1 à 50% d'autres adjuvants.

2. Feuille suivant la revendication 1, **caractérisée en ce que** le rouleau se contracte de pas plus de 3% transversalement au sens de tirage, pendant une durée d'entreposage de 3 mois à 25°C.

3. Feuille suivant la revendication 1, contenant P1 à P5 dans les proportions pondérales suivantes :
P1 : 30 à 90%,
P2 : 30 à 90%,
P3 : 0,5 à 5%,
P4 : 0,5 à 5%,
P5 : 0,5 à 5%,
P6 : 0,5 à 25%.

4. Feuille suivant la revendication 1, contenant, dans la phase molle P1, un copolymère bloc statistique à base de styrène et de butadiène.

5. Feuille suivant la revendication 2, contenant, comme polymère thermoplastique P2, un homopolymère de styrène, un homopolymère de styrène modifié quant à la résistance au choc ou un copolymère bloc de styrène-butadiène présentant une température de transition vitreuse T_{g} supérieure à 25°C.

6. Feuille suivant la revendication 1, contenant un polymère bloc P1, tel qu'obtenu par polymérisation anionique, au moins la polymérisation de la phase molle ayant été effectuée en présence d'un cosolvant polaire.

7. Feuille suivant la revendication 1, contenant un copolymère bloc P1, qui présente plusieurs blocs B/S ayant une masse molaire différente par molécule.

8. Feuille suivant la revendication 1, contenant un copolymère bloc P1, représenté par une ou plusieurs des formules générales (1) à (12)
(1) S-B/S-S;
(2) (S-B/S)ₙ;
(3) (S-B/S)ₙ-S;
(4) B/S-(S-B/S)ₙ;
(5) X-[(S-B/S)ₙ]ₘ₊₁;
(6) X-[(B/S-S)ₙ]ₘ₊₁;
(7) X-[(S-B/S)ₙ-S]ₘ₊₁;
(8) X-[(B/S-S)ₙ-B/S]ₘ₊₁;
(9) Y-[(S-B/S)ₙ]ₘ₊₁;
(10) Y-[(B/S-S)ₙ]ₘ₊₁;
(11) Y-[(S-B/S)ₙ-S]ₘ₊₁;
(12) Y-[(B/S-S)ₙ-B/S]ₘ₊₁;
où X représente le radical d'un amorceur n-fonctionnel, Y le radical d'un agent de couplage m-fonctionnel et m et n sont des nombres naturels de 1 à 10.

9. Feuille suivant la revendication 1, contenant un copolymère bloc présentant une des formules générales X-[-B/S-S]₂ et Y-[-B/S-S]₂.

10. Feuille suivant la revendication 1, contenant un copolymère bloc dont la phase molle est subdivisée en blocs
(13) (B/S)₁-(B/S)₂,
(14) (B/S)₁-(B/S)₂-(B/S)₁
ou
(15) (B/S)₁-(B/S)₂-(B/S)₃,
où les indices 1, 2, 3 ... représentent des structures différentes dans le sens que le rapport substance vinylaromatique/diène-(S/B) dans les différents blocs B/S est différent ou se modifie de manière continue à l'intérieur d'un bloc dans les limites (B/S)₁-(B/S)₂, la température de transition vitreuse T_{g} de chaque bloc partiel étant inférieure à 25°C.

11. Produit de coextrusion à base d'au moins deux couches d'épaisseur quelconque, dans lequel au moins une couche est constituée de la feuille suivant la revendication 1 et au moins une couche d'un polymère traitable de manière thermoplastique.

12. Produit de coextrusion à base d'au moins deux couches d'épaisseur quelconque, dans lequel au moins une couche est constituée de la feuille suivant la revendication 1 et au moins une couche d'un polymère partiellement cristallin.

13. Produit de coextrusion suivant l'une des revendications 11 et 12, dans lequel il y a une structure de couche P1/P2/P1 ou P2/P1/P2 et P2 est choisi parmi du polyéthylène, du polypropylène, du téréphtalate de polyéthylène, du téréphtalate de polybutylène et du polyamide.

14. Procédé de préparation d'une feuille d'emballage contenant un copolymère bloc suivant la revendication 1, par extrusion d'une masse de moulage correspondante.

15. Utilisation d'une feuille suivant l'une des revendications 1 à 10, pour l'emballage d'aliments.

16. Utilisation d'une feuille suivant l'une des revendications 1 à 10, comme remplacement d'une feuille à base de chlorure de polyvinyle.
